# DEMANDE DE BREVET EUROPEEN

(11) **EP 1 245 270 A1**
(43) Date de publication de la demande: **02.10.2002**
(21) Numéro de dépôt: 02290645.7
(22) Date de dépôt: 14.03.2002
(51) Int. Cl.: B01J 2/28

(54) **Procédé de granulation d'amendements dolomitiques mixtes**

(30) Priorité: 23.03.2001 FR 0103933
(71) Demandeur: GRANDE PAROISSE, F-92800 Puteaux (FR)
(72) Inventeur: Kieger, Stéphane, 76000 Rouen (FR); Zelvine, Rémy, 12400 Vabres l'Abbaye (FR)
(74) Mandataire: Ohresser, François

(57) **Abrégé**

L'invention concerne un procédé de fabrication d'amendements calcaires mixtes sous forme de granulés consistant à soumettre un amendement à base de dolomies ayant une teneur en magnésium MgO comprise entre 5 et 15% poids et une teneur en calcium CaO comprise entre 30 et 45% poids à un traitement de granulation par malaxage mettant en oeuvre une solution aqueuse d'un acide minéral fort et du nitrate d'ammonium liquide sous forme d'une solution concentrée, la solution aqueuse d'acide étant avantageusement introduite en amont du nitrate d'ammonium.

## Description

La présente invention a pour objet un procédé de granulation de produits amendants calcaires mixtes, ainsi que les produits amendants calcaires obtenus selon le procédé.

En agriculture, une des techniques pour lutter contre l'acidité des sols, consiste à lui ajouter des amendements minéraux basiques capables d'augmenter le pH du sol ce qui se traduit par une meilleure bio disponibilité en éléments minéraux et oligo-éléments bénéfiques sur la culture. En plus de cette action chimique, l'apport d'un amendement a des effets favorables sur les propriétés physiques, la perméabilité notamment, ainsi que sur l'activité biologique du sol.

Les amendements calcaires qui ont pour constituants principaux MgO et CaO sont de plusieurs types et parmi eux on peut citer les amendements calcaires magnésiens, les amendements magnésiens et amendements dolomitiques.

Les amendements qui sont issus du lavage des granulats calcaires suivi d'un broyage séchage à la chaux (chaux à 95% poids) sont appelés alors amendements mixtes, la chaux conférant à l'amendement des propriétés particulières. La teneur en chaux de l'amendement est généralement comprise entre 15 et 25 % poids. Cette technique de séchage a fait par ailleurs l'objet du brevet français N° 89 15138.

Les amendements actuellement sur le marché le sont, soit sous forme de poudre, soit sous forme de granulés. Les amendements pulvérulents présentant une grande finesse granulométrique par exemple 90% de particules passant au tamis de 50 m, ont une bonne vitesse de dissolution dans le sol qui donne des résultats agronomiques très satisfaisants. Cependant ce type de présentation nécessite des conditions particulières de mise en oeuvre pour éviter des envolements de poussières au cours de l'épandage et en outre ne réduit en rien les entraînements des produits une fois épandus.

Un intérêt évident pour l'agriculteur serait de disposer d'un produit granulé pouvant être stocké, mis en oeuvre avec les mêmes outils que ceux utilisés pour l'épandage des engrais minéraux solides et présentant en final pour l'utilisateur les mêmes performances que les produits proposés sous forme de poudre.

Si les techniques usuelles de granulation donnent parfois de bons résultats, c'est-à-dire une bonne délitescence à l'eau et une dureté satisfaisante (résistance à l'écrasement) avec les amendements classiques, en revanche pour les amendements mixtes elles ne permettent pas d'atteindre ces performances dans de bonnes conditions.

Les techniques usuelles de granulation sont la granulation à l'eau et la granulation par addition d'agents apportant la cohésion au granulé tout en lui conférant des propriétés de délitescence à l'eau.

La granulation à l'eau permet d'obtenir aisément des granulés très durs mais qui, malheureusement, ne se délitant pas ne peuvent donner des résultats satisfaisants en agriculture.

Il est connu de l'homme de l'art que pour la granulation on peut utiliser des agents de cohésion la favorisant tout en apportant certaines propriétés de délitescence à l'eau. On peut citer parmi ceux-ci des composés aussi différents chimiquement que les lignosulfonates, la Kiesérite (ou sulfate d'ammonium) ou le nitrate d'ammonium ou même un composé soluble dans l'eau comme le chlorure de sodium qui viendrait apporter de la solubilité (délitescence) au granulé formé à l'eau.

A l'expérience, les composés de type lignosulfonates ou Kiesérite n'améliorent en rien les propriétés de délitescence des granulés et ne sont donc pas utilisables. Si le chlorure de sodium apporte bien les performances en matière de délitescence en revanche la tenue mécanique est insuffisante et ne permet pas un stockage convenable des granulés qui conduira à une prise en masse du composé final.

Le nitrate d'ammonium apporte bien au produit, amendement mixte, des propriétés de délitescence et de dureté convenables, mais au cours de la mise en oeuvre du nitrate d'ammonium introduit sous forme liquide concentrée dans l'amendement dolomitique, il se produit un fort dégagement gazeux d'ammoniac qui ne permet pas une exploitation industrielle convenable.

Afin de remédier au dégagement gazeux rendant délicate une mise en oeuvre industrielle, il a été trouvé qu'il fallait « inerter » l'amendement calcaire par un traitement à l'acide minéral fort qui tamponne la réactivité du nitrate d'ammonium vis à vis de l'amendement et donc limite l'émission d'ammoniac.

La présente invention a pour objet de pallier ces inconvénients et propose un nouveau procédé de fabrication de produits amendants calcaires mixtes sous forme de granulés ainsi que les produits amendants correspondants.

La présente invention a pour objet un procédé de fabrication de produits amendants calcaires sous forme de granulés consistant à soumettre un amendement mixte ayant une teneur en magnésium sous forme de MgO_comprise entre 5 et 15% poids, une teneur en calcium sous forme de CaO comprise entre 30 et 45% poids à un traitement de granulation par malaxage mettant en oeuvre une solution aqueuse d'un acide minéral fort et du nitrate d'ammonium sous forme liquide concentrée.

Ces teneurs, caractéristiques de l'amendement, n'atteignent pas 100% dans la mesure où il n'est pas tenu compte des autres constituants tels que silicates et carbonates.

Préalablement l'amendement mixte sera préparé de telle sorte que la chaux réagisse en totalité..

On entend par granulation par malaxage la mise en présence des éléments à agglomérer, amendement mixte et nitrate d'ammonium, dans un dispositif permettant l'agglomération et le grossissement des particules solides, par exemple un granulateur, cylindre disposé horizontalement mis en rotation dans une atmosphère convenable.

L'acide minéral fort sera de préférence choisi parmi les acides phosphorique, sulfurique et nitrique. La quantité de solution d'acide fort introduite représente entre 5 et 15 % poids d'amendement.

Le nitrate d'ammonium est introduit sous forme concentrée à une teneur en NO₃NH₄ supérieure ou égale à 93 % poids.

La quantité de nitrate d'ammonium introduite dans le milieu est généralement comprise entre 10 et 25 % poids d'amendement.

L'addition initiale de l'acide minéral fort se fera avantageusement avant la réaction entre l'amendement et le nitrate d'ammonium. Cependant sur le plan industriel, il sera généralement plus simple d'introduire simultanément la solution d'acide minéral fort et le nitrate d'ammonium sans que cela porte préjudice à l'efficacité du traitement.

Lors de la mise en oeuvre industrielle, il est particulièrement avantageux d'utiliser la solution d'acide fort à la fois pour « inerter » l'amendement et pour absorber l'ammoniac qui se dégage du milieu, évitant ainsi tout dégagement substantiel d'ammoniac. C'est donc au niveau de la tour de lavage absorbant l'ammoniac se dégageant de l'unité, située en aval de l'unité dont l'effluent est recyclé que l'on introduit l'acide nécessaire à l' « inertage » de l'amendement.

Lors de la mise en oeuvre de cette variante, le pH de la solution d'acide fort recirculant après l'absorption de l'ammoniac est généralement compris entre 2 et 4. Ce pH, ainsi que la qualité des granulés seront contrôlés afin de réguler les débits d'introduction d'acide fort et d'eau sous forme liquide ou vapeur au sein du granulateur.

Afin de faciliter la granulation de la vapeur d'eau et de l'eau chaude peuvent aussi être pulvérisées sur l'ensemble des constituants (dolomie, acide, nitrate d'ammonium) par exemple par des tuyères disposées le long de l'axe du granulateur.

L'invention a aussi pour objet les granulés obtenus par le procédé. Les granulés issus du granulateur sont récupérés par déversement, tamisés, séchés et la fraction utile, granulés de diamètre de 2,5 à 4 mm, est extraite. Les fractions non conformes sont recyclées dans le granulateur. Le séchage s'effectue généralement à une température entre 60 et 120 °C et de préférence entre 80 et 95 °C.

L'invention sera mieux comprise à la lecture des exemples suivants donnés à titre de simple illustration.

Pour les expériences ci-après on utilisera :
- un test de délitescence consistant a incorporer dans une boite de pétri remplie d'eau (50 ml) 10 grains et à observer après 24 h l'état des grains (note de 0 : pas de délitescence, à 100% : totale délitescence après 24 h.),
- un test de dureté consistant à mesurer la force d'écrasement des grains (force exprimée en kg). En dessous de 1 kg on considère que le produit ne peut être stocké durablement.

### Exemple 1

On introduit dans un granulateur de laboratoire de type « Eirich » (bol chauffant à double enveloppe équipé d'un malaxeur planétaire), une charge constituée par 3000 g de dolomie en présence de 250 g d'eau. Le bol de granulation est chauffé à la vapeur (140°C). Le malaxage du mélange est poursuivi pendant quelques minutes jusqu'à obtention de granulés. Les granulés sont récupérés par déversement, tamisés, séchés (3 h à 100°C) et la fraction utile (granulés de diamètre de 2,5 à 4 mm) est pesée pour apprécier la facilité du mélange à granuler. Cette charge se granule très bien et se présente sous l'aspect de granules très durs, dureté supérieure à 20 kg. Néanmoins, elle est « non délitable » à l'eau.

### Exemples 2 à 5

Pour ces exemples mettant en oeuvre un agent de cohésion on a utilisé des lignosulfonates (composé A) , la Kiesérite (composé B), le nitrate d'ammonium (composé C) et le chlorure de sodium (composé D) Les essais effectués dans un granulateur de type Eirich dans les conditions décrites dans l'exemple 1 conduisent aux résultats suivants.

| Composés | A | B | C | D |
|---|---|---|---|---|
| Délitescence (%) | 0 | 0 | 100 | 100 |
| Dureté du grain (kg) | < 1 | < 1 | 3 | < 1 |

Les composés A et B ne présentent pas de délitescence conforme aux besoins. Si l'addition d'un sel soluble dans l'eau comme le chlorure de sodium (D) favorise fortement la délitescence, elle conduit à un grain trop mou qui ne présente pas de bonnes propriétés au stockage et à une prise en masse du composé final. Le meilleur résultat est donc obtenu en utilisant comme liant le nitrate d'ammonium.

### Exemple 6

3000 g de dolomie sont introduits dans un malaxeur Eirich. On verse 309 g d'acide phosphorique à 52% en P₂O₅ Le malaxage est poursuivi quelques minutes (1 à 2 minutes), puis une solution chaude de nitrate d'ammonium à 97% dans l'eau est introduite à hauteur de 450 g. La charge est considérée comme se granulant très facilement. La délitescence et la dureté du produit final sont excellentes

### Exemple 7

Un essai sur une unité pilote de granulation de 500 kg/h équipée d'un granulateur et d'un séchoir a été réalisé. Cette installation pilote est représentative de l'outil industriel utilisé dans la fabrication des engrais. La matière première (Dolomie) est envoyée après tamisage par un tapis de convoyage dans un granulateur de façon continue (son débit est de l'ordre de 233 kg/h dans les conditions de l'essai). Le granulateur est équipé d'une arrivée d'acide phosphorique (introduit au débit de 24 kg/h) et d'une arrivée de nitrate d'ammonium (introduit au débit de 44 kg/h). De la vapeur d'eau et de l'eau chaude sont également pulvérisés sur l'ensemble des constituants (dolomie, acide, nitrate d'ammonium) par des tuyères disposées le long de l'axe du granulateur. Pour éviter une décomposition éventuelle du nitrate d'ammonium en présence d'acide, la rampe d'arrivée d'acide fort est placée immédiatement à l'entrée du granulateur alors que la rampe d'arrivée de nitrate d'ammonium est située dans le dernier tiers du granulateur. Ainsi, la dolomie est d'abord en contact avec l'acide phosphorique puis avec le nitrate d'ammonium. Les grains formés dans le granulateur sont ensuite séchés puis criblés. La fraction marchande (de 2,5 à 4 mm) est récupérée au fur et à mesure de l'opération alors que la fraction fine et la fraction grossière après broyage sont recyclées dans le granulateur.

Les granulés d'amendements sont enrobés avec un agent de traitement anti-mottant analogue à celui utilisé dans le domaine des engrais. Ils répondent aux qualités requises pour l'épandage : grains de diamètre compris entre 2,5 et 4 mm, dureté supérieure à 2 kg permettant un stockage exempte de mottage et de formation de poussières, délitescence quasi complète du grain dans l'eau après 24 h.

## Revendications

1. Procédé de fabrication d'amendements calcaires mixtes sous forme de granulés consistant à soumettre un amendement à base de dolomies ayant une teneur en magnésium MgO comprise entre 5 et 15% poids et une teneur en calcium CaO comprise entre 30 et 45% poids à un traitement de granulation par malaxage mettant en oeuvre une solution aqueuse d'un acide choisi parmi les acides phosphorique, sulfurique et nitrique et du nitrate d'ammonium sous forme liquide concentrée.

2. Procédé selon la revendication 1 consistant à introduire la solution liquide d'acide avant l'introduction du nitrate d'ammonium.

3. Procédé selon l'une des revendications 1 et 2 dans lequel la quantité d'acide introduite représente en poids entre 5 et 15 % poids de la dolomie et la quantité de nitrate d'ammonium entre 10 et 25 % en poids de l'amendement.

4. Procédé selon l'une des revendications 1 à 3 dans lequel les granulés formés sont séchés, puis criblés pour recueillir la fraction de granulés ayant un diamètre compris entre 2,5 et 4 mm.

5. Procédé selon l'une des revendications 1 à 3 dans lequel les granulés formés présentent une bonne délitescence à l'eau et une dureté supérieure à 1 kg.

6. Procédé selon l'une des revendications 1 et 3 à 5 dans lequel la solution liquide d'acide est introduite au niveau de la tour de lavage de l'effluent gazeux contenant de l'ammoniac issu de l'unité et recyclé dans l'unité à un pH compris entre 2 et 4.

7. Amendement calcaire mixte granulé fabriqué selon le procédé de l'une des revendications 1 à 6.

8. Granulé d'amendement calcaire mixte contenant du nitrate d'ammonium ayant un diamètre compris entre 2,5 et 4 mm, présentant une bonne délitescence à l'eau et une dureté supérieure à 1 kg.
